# EUROPEAN PATENT SPECIFICATION

(11) **EP 3 992 471 B1**
(45) Date of publication and mention of the grant of the patent: **03.05.2023**
(21) Application number: 21203121.5
(22) Date of filing: 18.10.2021
(51) Int. Cl.: F16B 4/00, F16B 5/02, B62K 11/00

(54) **RESIN PART HAVING ATTACHMENT HOLE, ASSEMBLY PART INCLUDING THE SAME, AND STRADDLED VEHICLE**
HARZTEIL MIT BEFESTIGUNGSLOCH, MONTAGETEIL DAMIT UND GRÄTSCHSITZFAHRZEUG
PIÈCE DE RÉSINE DOTÉE D'UN TROU DE FIXATION, PIÈCE D'ASSEMBLAGE LA COMPRENANT, ET VÉHICULE À ENFOURCHER

(30) Priority: 30.10.2020 JP 2020182690
(43) Date of publication of application: 04.05.2022
(73) Proprietor: Yamaha Hatsudoki Kabushiki Kaisha, Iwata-shi, Shizuoka 438-8501 (JP)
(72) Inventor: Uchisawa, Akinori, Shizuoka, 438-8501 (JP); Abe, Shigeru, Shizuoka, 438-8501 (JP); Yamada, Yuto, Shizuoka, 438-8501 (JP)
(74) Representative: Grünecker Patent- und Rechtsanwälte PartG mbB

(56) References cited:
- JP-A- 2015 218 800
- US-A1- 2013 051 909
- US-A1- 2017 108 028

## Description

The present invention relates to a resin part according to the preamble of independent claim 1 having an attachment hole in which a fastener, such as a bolt or the like, is inserted, an assembly part including the resin part, and a straddled vehicle including the assembly part. Such a resin part can be taken from the prior art document JP 2015-218800 A.

Resin parts, such as, for example, a front fender, a side cover, or the like, of motorcycles, each of which is attached via a bolt or the like, have been known. In such a resin part, an attachment hole in which a bolt or the like is inserted is formed.

In order to reinforce the attachment hole, a collar formed of metal or the like is press-fitted in the attachment hole in some cases. In such a case, the bolt or the like is inserted in the collar. That is, the bolt or the like is inserted in the attachment hole via the collar.

If the collar is press-fitted in the attachment hole in advance and the resin part with the collar press-fitted in the attachment hole can be transported, it is only required to fasten the bolt or the like in attaching the resin part. Therefore, an installation work of the resin part is facilitated. However, in a case where the collar is press-fitted in the attachment hole in advance, it is necessary to prevent the collar from dropping off from the attachment hole in transporting or attaching the resin part.

Conventionally, in order to prevent the collar from dropping off, a plurality of protrusions are provided in an inner peripheral portion of the attachment hole. For example, such protrusions are disclosed in FIG. 9 of JP 2015-218800 A. In the resin part in which the plurality of protrusions are provided in the attachment hole, end portions of the protrusions are chipped in press-fitting the collar, so that the collar is fitted tightly to the protrusions. Thus, the collar is held in the attachment hole.

However, when the end portions of the protrusions are chipped, shavings are generated. When shavings are generated, in order to prevent the shavings from sticking to the bolt while the bolt is fastened, a separate process of removing the shavings in advance is needed.

Moreover, a dimensional error is caused in the attachment hole or the collar in some cases. If an inner diameter of the attachment hole is smaller than a design value, the collar cannot be press-fitted with human power in some cases. In such a case, the collar needs to be press-fitted using a tool, such as a hand press machine or the like. If the inner diameter of the attachment hole is larger than the design value, the collar cannot be held sufficiently in the attachment hole in some cases. In such a case, in order to prevent the collar from dropping off, a separate process of holding the collar with a masking tape or the like is needed.

It is therefore an object of the present invention to provide a resin part in which shavings are not generated in press-fitting the collar in an attachment hole and the collar can be press-fitted with human power and is less likely to drop off even when there is a dimensional error in the attachment hole or the collar. According to the present invention said object is solved by a resin part having the features of independent claim 1. Preferred embodiments are laid down in the dependent claims.

As a resin part having an attachment hole, a resin part having an attachment hole in which a collar is press-fitted is disclosed herein. The resin part includes a plurality of fasteners and a plurality of beams. The fasteners extend in a circumferential direction of the attachment hole and also extend inwardly from an inner peripheral potion of the attachment hole in a radial direction. The plurality of fasteners are arrayed in the circumferential direction of the attachment hole. Each of the beams includes a root portion continuous to the inner peripheral potion of the attachment hole and an end portion located more inward than the root portion in the radial direction. The beam is configured to be flexibly deformable. The beam extends in a direction tilted from the radial direction of the attachment hole. The end portions of the beams are located more inward than the fasteners in the radial direction.

According to the resin part, in press-fitting the collar in the attachment hole, the beams are bent, and therefore, the attachment hole is not chipped by the collar. Shavings are not generated, and a process of removing shavings is not needed. According to the resin part, the collar is held in the attachment hole with elastic forces of the beams due to bending of the beams. Even when there is a dimensional error in the attachment hole or the collar, the elastic forces of the beams hardly vary. Therefore, even when there is a dimensional error in the attachment hole or the collar, the collar can be press-fitted with human power, and moreover, the collar can be prevented from dropping off.

According to one preferred aspect, when viewed from a direction along a center line of the attachment hole, a lateral width of the beams is smaller than a lateral width of the fasteners.

According to the above-described preferred aspect, the attachment hole in which preferable fasteners and beams are provided can be achieved.

According to one preferred aspect, when viewed from a direction along a center line of the attachment hole, a dimension of the beams in the circumferential direction is smaller than a dimension of the fasteners in the circumferential direction.

According to the above-described preferred aspect, the attachment hole in which preferable fasteners and beams are provided can be achieved.

According to one preferred aspect, the number of the beams and the number of the fasteners are equal. Each of the beams is arranged between corresponding adjacent two of the fasteners in the circumferential direction.

According to the above-described preferred aspect, the collar can be held in the attachment hole stably in a balanced manner.

There is no particular limitation on the number of the beams, but the number of the beams may be, for example, three.

According to one preferred aspect, when viewed from a direction along a center line of the attachment hole, the end portion of each of the beams has a curved outer edge.

According to the above-described preferred aspect, when the beams are bent, the end portions of the beams are hardly caught by the collar. Therefore, the collar can be smoothly press-fitted in the attachment hole.

When viewed from a direction along a center line of the attachment hole, an end portion of each of the fasteners may have a circular-arc peripheral edge.

According to one preferred aspect, a tilt angle of each of the beams with respect to the radial direction of the attachment hole is 30 degrees or more.

According to the above-described preferred aspect, a length of the beams is sufficiently ensured. In press-fitting the collar, the beams can be appropriately bent.

An assembly part disclosed herein includes the resin part and the collar press-fitted in the attachment hole. The collar includes a cylindrical portion having an outer peripheral surface and a disc portion extending outwardly from the cylindrical portion in the radial direction. The outer diameter of the disc portion is larger than double of a distance between the center line of the attachment hole and the each of the fasteners. The outer diameter of the cylindrical portion is larger than double of a distance between the center line of the attachment hole and the end portion of each of the beams when the beams are not flexibly deformed. The disc portion is opposed to the fasteners in the direction of the center line of the attachment hole. The outer peripheral surface of the cylindrical portion contacts the beams. The cylindrical portion is held by the beams with an elastic force generated by flexible deformation of the beams.

Another assembly part disclosed herein includes the resin part and the collar press-fitted in the attachment hole. The collar includes a cylindrical portion having an outer peripheral surface. The outer diameter of the cylindrical portion is larger than double of a distance between the center line of the attachment hole and the end portion of each of the beams when the beams are not flexibly deformed. The outer peripheral surface of the cylindrical portion contacts the beams. The cylindrical portion is held by the beams with an elastic force generated by flexible deformation of the beams.

A straddled vehicle disclosed herein includes a front fender and a side cover. The front fender and/or the side cover are/is constituted by the assembly part.

### ADVANTAGES OF THE INVENTION

According to the present teaching, it is possible to provide a resin part in which shavings are not generated in press-fitting a collar in an attachment hole and the collar can be press-fitted with human power and is less likely to drop off even when there is a dimensional error in the attachment hole or the collar.

### BRIEF DESCRIPTION OF THE DRAWINGS

FIG. 1 is a left side view of a motorcycle according to an embodiment.
FIG. 2 is a left side view of a front fender.
FIG. 3 is a rear view of the front fender.
FIG. 4 is a front view of an attachment hole.
FIG. 5 is a perspective view of the attachment hole.
FIG. 6 is a front view of a collar.
FIG. 7 is a side view of the collar.
FIG. 8 is a front view of the attachment hole in which the collar is press-fitted.
FIG. 9 is a cross-sectional view of an attachment portion of the front fender and a front fork.
FIG. 10 is a left side view of a side cover.
FIG. 11 is a side view of a collar according to another embodiment.

### DESCRIPTION OF EMBODIMENTS

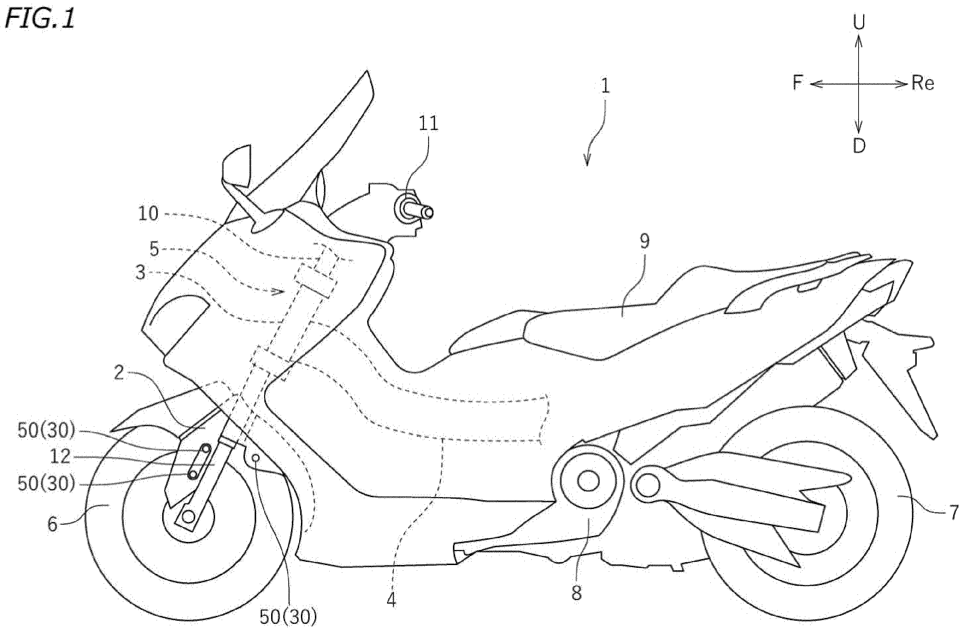

With reference to the attached drawings, embodiments will be described below. As illustrated in FIG. 1, a resin part according to this embodiment is a front fender 2 of a motorcycle 1.

The motorcycle 1 is an example of a straddled vehicle. The motorcycle 1 includes a vehicle body frame 5 including a head pipe 3 and a main frame 4, a front wheel 6, a rear wheel 7, a unit swing type power unit 8 that drives the rear wheel 7, and a seat 9 on which a rider sits. Although not illustrated, an internal combustion engine and a transmission are provided in the power unit 8. A steering shaft 10 is inserted in the head pipe 3. A handle bar 11 is fixed to an upper portion of the steering shaft 10. A front fork 12 is fixed to a lower portion of the steering shaft 10.

In the following description, unless specifically stated otherwise, front, rear, left, right, up, and down mean front, rear, left, right, up, and down when viewed from a virtual rider who sits on the seat 9 of the motorcycle 1 in a state in which the motorcycle 1 on which the rider is not and no load is put is stopped upright on a horizontal plane, respectively. Reference signs F, Re, L, R, U, and D in the drawings denote front, rear, left, right, up, and down, respectively.

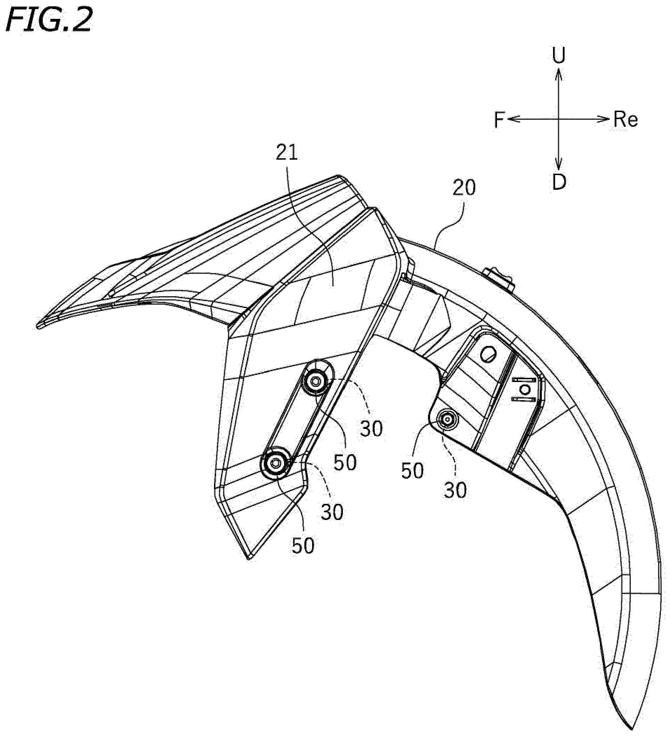

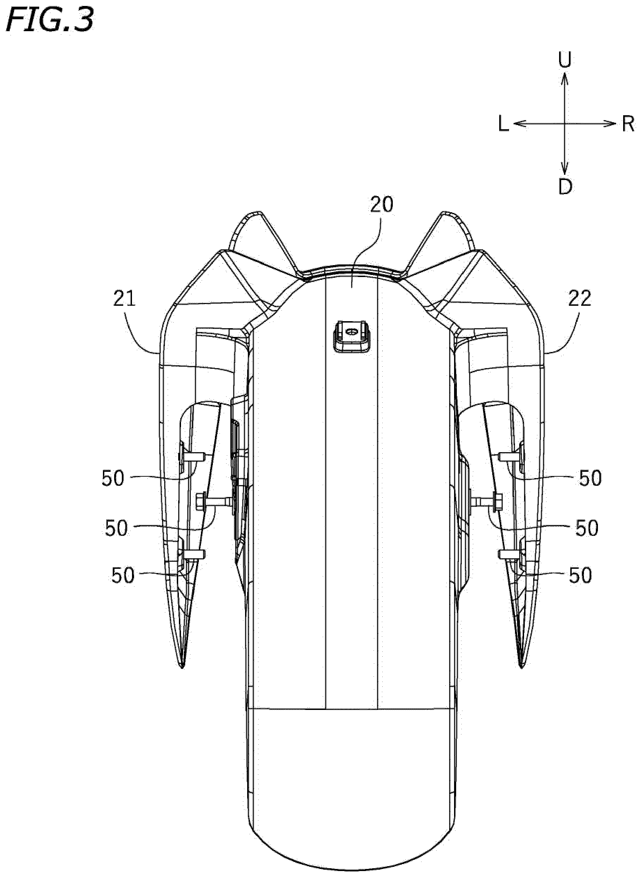

The front fender 2 is attached to the front fork 12 and is supported by the front fork 12. FIG. 2 is a left side view of the front fender 2. FIG. 3 is a rear view of the front fender 2. The front fender 2 is an example of a resin part. Herein, a material of the front fender 2 is a polypropylene resin. However, the material of the resin part is not limited to a polypropylene resin and may be some other resin, such as an acrylonitrile butadiene styrene (ABS) resin or the like.

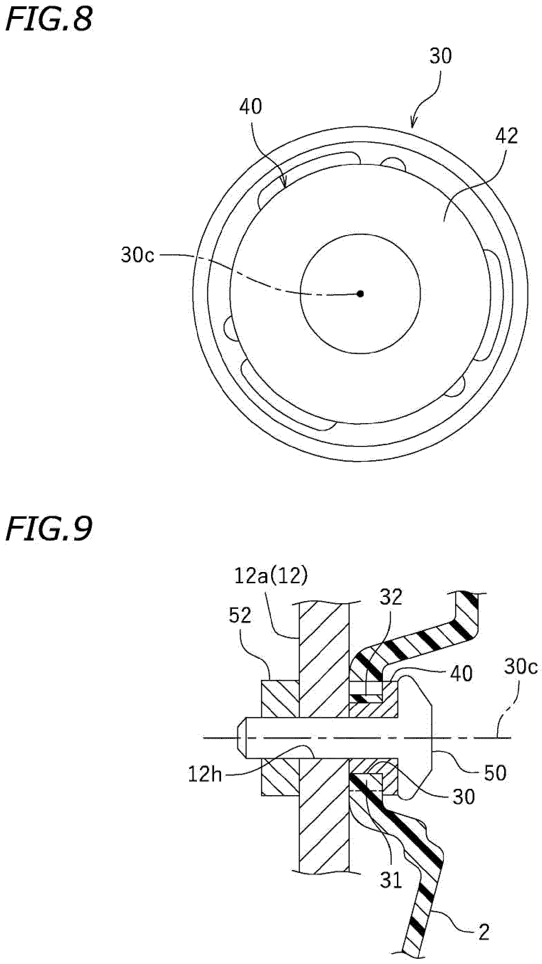

The front fender 2 includes a lateral wall 20 located above and rearward of the front wheel 6, a left wall 21 located leftward of the front wheel 6, and a right wall 22 located rightward of the front wheel 6. The front fork 12 includes a bracket 12a (not illustrate in FIG. 1. See FIG. 9). The left wall 21 and the right wall 22 are fixed to the bracket 12a of the front fork 12 via bolts 50.

Each of the left wall 21 and the right wall 22 includes attachment holes 30 in which the bolts 50 are inserted. Next, details of the attachment holes 30 will be described.

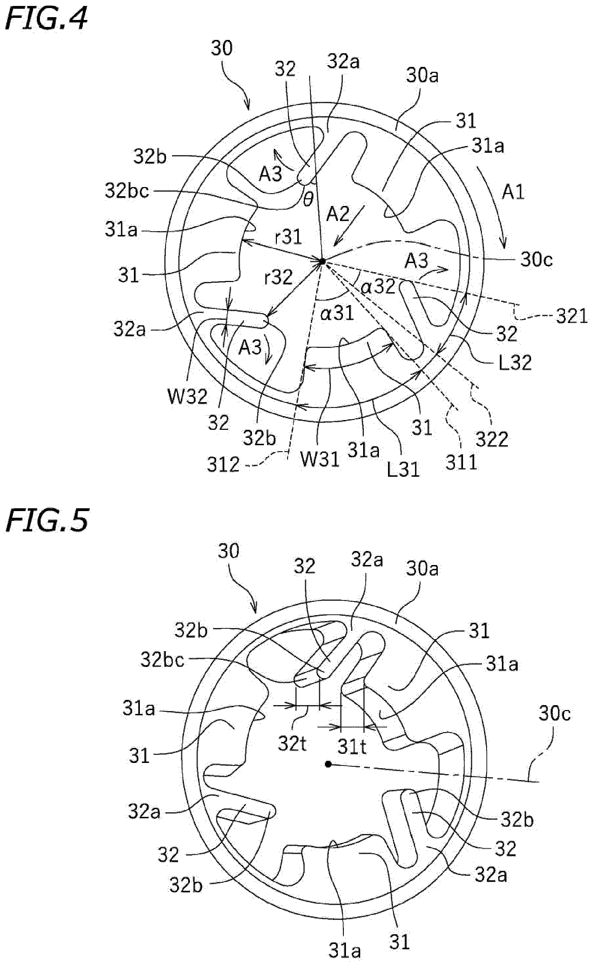

FIG. 4 is a view of the attachment hole 30 when viewed from a direction along a center line 30c of the attachment hole 30. Although FIG. 4 is a view of the attachment hole 30 when viewed from a left side of the motorcycle 1, this view is also referred to as a front view herein. FIG. 5 is a perspective view of the attachment hole 30, illustrating the attachment hole 30 when viewed from a direction tilted from the center line 30c. In the attachment hole 30, a plurality of fasteners 31 and a plurality of beams 32 are provided. There is no particular limitation on the number of the fasteners 31 and the number of the beams 32. Herein, three fasteners 31 and three beams 32 are provided. The number of the fasteners 31 and the number of the beams 32 are equal. The fasteners 31 are arrayed along a circumferential direction A1 of the attachment hole 30. The beams 32 are arrayed along the circumferential direction A1 of the attachment hole 30. The fasteners 31 and the beams 32 are alternately arranged in the circumferential direction A1. Each of the beams 32 is arranged between corresponding adjacent two of the fasteners 31 in the circumferential direction A1.

The fastener 31 extends in the circumferential direction A1 and also extends from an inner peripheral potion 30a of the attachment hole 30 in an inward direction A1 in a radial direction. As illustrated in FIG. 4, when viewed from a direction along the center line 30c, an end portion of the fastener 31 has a circular-arc peripheral edge 31a. Herein, the peripheral edge 31a is formed in a circular-arc shape with the center line 30c as a center.

Each of the beams 32 includes a root portion 32a continuous to the inner peripheral potion 30a of the attachment hole 30 and an end portion 32b located more inward than the root portion 32a in the radial direction. The end portion 32b is rounded. The end portion 32b has a curved outer edge 32bc when viewed from the direction along the center line 30c. The beam 32 extends in a direction tilted from the radial direction of the attachment hole 30. There is no particular limitation on a tilt angle θ of the beam 32 with respect to the radial direction of the attachment hole 30. The tilt angle θ is, for example, 30 degrees or more. The beam 32 is configured to be flexibly deformed such that the end portion 32b is directed outward in the radial direction (see an arrow A3).

The end portions 32b of the beams 32 are located more inward than the fasteners 31 in the radial direction. A distance r32 between the end portion 32b of each of the beams 32 and the center line 30c is smaller than a distance r31 between each of the fasteners 31 and the center line 30c. That is, r32 < r31.

When viewed from the direction along the center line 30c, a lateral width W32 of the beams 32 is smaller than a lateral width W31 of the fasteners 31. That is, W32 < W31. Note that, if the lateral width of the beams 32 is not constant, the lateral width W32 of the beams 32 means an average value of the lateral width of the beams 32. If the lateral width of the fasteners 31 is not constant, the lateral width W31 of the fasteners 31 means an average value of the lateral width of the fasteners 31.

When viewed from the direction along the center line 30c, a dimension L32 of the beams 32 in a circumferential direction is smaller than a dimension L31 of the fasteners 31 in the circumferential direction. That is, L32 < L31. An angle formed by a line 321 connecting the center line 30c and one end of each of the beams 32 in the circumferential direction and a line 322 connecting the center line 30c and the other end of the beam 32 in the circumferential direction is α32. An angle formed by a line 311 connecting the center line 30c and one end of each of the fasteners 31 in the circumferential direction and a line 312 connecting the center line 30c and the other end of the fastener 31 in the circumferential direction is α31. α32 is smaller than α31. That is, α32 < α31.

As illustrated in FIG. 5, a thickness 32t of the beams 32 and a thickness 311 of the fasteners 31 are equal. That is, a dimension 32t of the beams 32 in a direction of the center line 30c and a dimension 311 of the fasteners 31 in the direction of the center line 30c are equal. However, the dimension 32t and the dimension 31t are not limited. The thickness 32t of the beams 32 may be larger than the thickness 31t of the fasteners 31 and may be smaller than the thickness 31t.

The attachment hole 30 has the above-described configuration. As described above, the bolt 50 is inserted in the attachment hole 30, but the bolt 50 is not directly inserted in the attachment hole 30. A collar 40 is interposed between the bolt 50 and the attachment hole 30. Next, the collar 40 will be described.

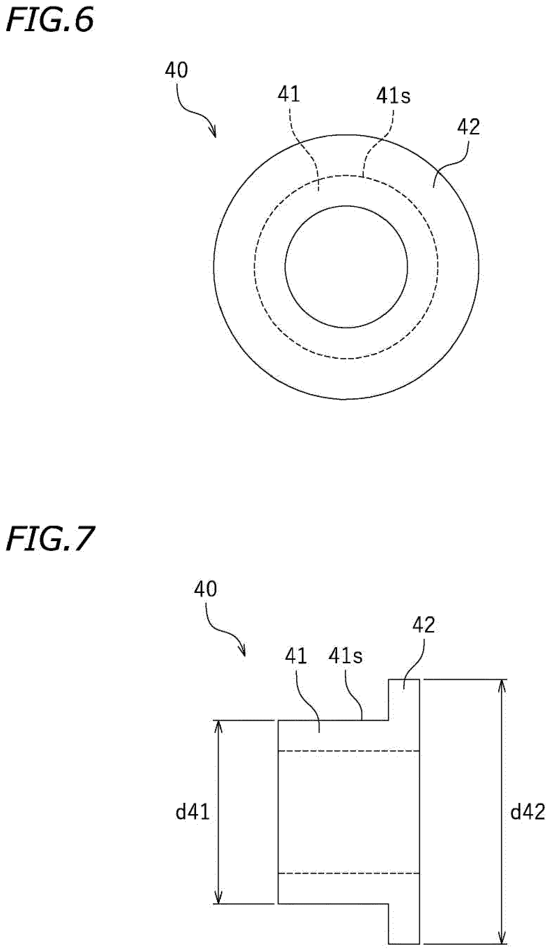

FIG. 6 is a front view of the collar 40. FIG. 7 is a side view of the collar 40. As illustrated in FIG. 6 and FIG. 7, the collar 40 includes a cylindrical portion 41 having an outer peripheral surface 41s and a disc portion 42 extending outwardly from the cylindrical portion 41 in a radial direction. The collar 40 is formed of metal, such as stainless steel or the like. However, there is no particular limitation on a material of the collar 40.

The collar 40 is inserted in the attachment hole 30 along the center line 30c of the attachment hole 30. The collar 40 is configured such that, in inserting the collar 40 in the attachment hole 30, the cylindrical portion 41 is inserted inward of the fasteners 31 in the radial direction and the cylindrical portion 41 presses the beams 32 outwardly in the radial direction. The collar 40 is also configured such that the disc portion 42 is opposed to the fasteners 31 in inserting the collar 40 in the attachment hole 30.

Specifically, an outer diameter d41 of the cylindrical portion 41 is larger than double of the distance r32 (see FIG. 4) between the center line 30c and the end portion 32b of each of the beams 32 when the beams 32 are not elastically deformed. That is, d41 > 2 × r32. Therefore, in inserting the collar 40 in the attachment hole 30, the outer peripheral surface 41a of the collar 40 contacts with the beams 32 and the beams 32 receive a force directed outward in the radial direction from the collar 40. When the beams 32 receive the force, the beams 32 are flexibly deformed. Due to flexible deformation, an elastic force directed inwardly in the radial direction is generated in the beams 32. The collar 40 receives the elastic force from the beams 32 and thus is held in the attachment hole 30. In the above-described manner, the collar 40 is press-fitted in the attachment hole 30.

An outer diameter d42 of the disc portion 42 is larger than double of the distance r31 between the center line 30c of the attachment hole 30 and each of the fasteners 31. That is, d42 > 2 × r31. Therefore, when the collar 40 is inserted in the attachment hole 30, the disc portion 42 contacts the fasteners 31 in due course and further insertion is restricted. Thus, positioning of the collar 40 is performed. The disc portion 42 is opposed to the fasteners 31 in the direction of the center line 30c of the attachment hole 30.

The collars 40 are held in the attachment holes 30, and therefore, the front fender 2 can be transported with the collars 40 press-fitted in the attachment holes 30. The collars 40 are press-fitted in the attachment holes 30 in advance, and then, the front fender 2 can be transported to an assembling site with the collars 40. The front fender 2 and the collars 40 can be transported as one assembly part. In assembling the motorcycle 1, as illustrated in FIG. 9, positions of each of the attachment holes 30 of the front fender 2 and a corresponding attachment hole 12h of the bracket 12a of the front fork 12 are matched, and thereafter, the bolt 50 is inserted in the collar 40 and the attachment hole 12h. Then, the bolt 50 is fastened to a nut 52, so that the front fender 2 can be attached to the bracket 12a of the front fork 12. As described above, according to this embodiment, the front fender 2 can be transported with the collars 40 press-fitted in the attachment holes 30, a work of press-fitting the collars 40 is not needed in assembling, and it is only required to fasten the bolts 50.

As described above, according to this embodiment, the front fender 2 includes the attachment holes 30 each including the fasteners 31 and the beams 32 provided therein. In press-fitting the collar 40, the beams 32 are bent, and the attachment hole 30 is not chipped by the collar 40. In press-fitting the collar 40, shavings are not generated from the attachment hole 30. Accordingly, a process of removing shavings is not needed.

The collar 40 is held in the attachment hole 30 due to bending of the beams 32. The collar 40 is held by elastic forces of the beams 32. At this time, even when there is a dimensional error in the attachment hole 30 and the collar 40, the elastic forces of the beams 32 hardly varies. Even when there is a dimensional error in the attachment hole 30 and the collar 40, a force holding the collar 40 hardly varies. For example, due to a dimensional error, if an inner diameter of the attachment hole 30 is slightly smaller than a design value or if an outer diameter of the collar 40 is slightly larger than a design value, the elastic forces of the beams 32 is increased slightly, but the collar 40 can be press-fitted with human power. Therefore, a tool, such as a hand press machine or the like, is not needed. Due to a dimensional error, if the inner diameter of the attachment hole 30 is slightly larger than the design value or if the outer diameter of the collar 40 is slightly smaller than the design value, the elastic forces of the beams 32 are slightly reduced, but the collar 40 is held in the attachment hole 30. Therefore, a process of holding the collar 40 with a masking tape or the like is not needed. According to the front fender 2 of this embodiment, even when there is a dimensional error in the attachment hole 30 or the collar 40, the collar 40 can be press-fitted with human power, and the collar 40 can be prevented from dropping off.

In fastening the bolt 50, the fasteners 31 receive a pressure from the collar 40, and therefore, the fasteners 31 preferably have a relatively high rigidity. On the other hand, the beams 32 need to be bent in press-fitting the collar 40, and therefore, the beams 32 are preferably bent relatively easily. In this embodiment, when viewed from the direction along the center line 30c of the attachment hole 30, the lateral width W32 of the beams 32 is smaller than the lateral width W31 of the fasteners 31. When viewed from the direction along the center line 30c of the attachment hole 30, the dimension L32 of the beams 32 in the circumferential direction is smaller than the dimension L31 of the fasteners 31 in the circumferential direction. According to this embodiment, the attachment hole 30 in which preferable fasteners 31 and beams 32 are provided can be achieved.

According to this embodiment, the number of beams 32 and the number of the fasteners 31 are equal. Each of the beams 32 is arranged between corresponding adjacent two of the fasteners 31 in the circumferential direction. According to this embodiment, the collar 40 can be held in the attachment hole 30 stably in a balanced manner.

According to this embodiment, when viewed from the direction along the center line 30c of the attachment hole 30, the end portion 32b of each of the beams 32 has the curved outer edge 32bc. In press-fitting the collar 40, the end portions 32b of the beams 32 are hardly caught, and therefore, can be smoothly moved outwardly in the radial direction. The beams 32 can be smoothly bent. Accordingly, the collar 40 can be smoothly press-fitted.

According to this embodiment, the tilt angle θ of each of the beams 32 with respect to the radial direction of the attachment hole 30 is 30 degrees or more. The tilt angle θ is largely large, and therefore, a length of the beams 32 can be sufficiently ensured. The beams 32 that are easily bent can be achieved. Therefore, in press-fitting the collar 40, the beams 32 can be appropriately bent.

One embodiment has been described above, but the above-described embodiment is merely an example. The present teaching can be implemented in various other modes. Next, examples of other embodiments will be briefly described.

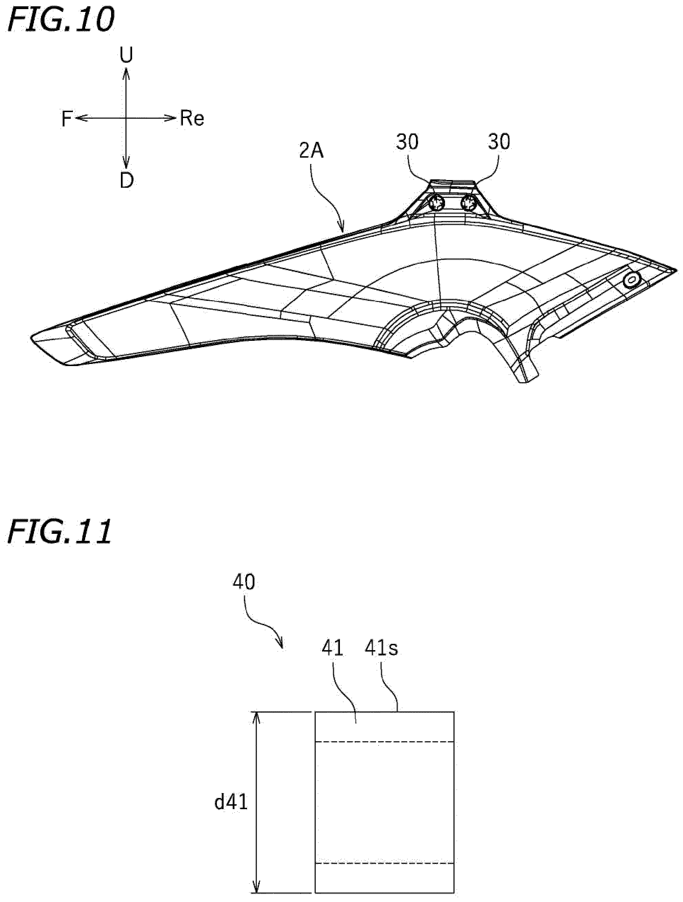

The resin part including the attachment holes 30 is not limited to the front fender 2. The resin part may be some other vehicle part of the motorcycle 1. For example, as illustrated in FIG. 10, the resin part including the attachment holes 30 may be a side cover 2A of the motorcycle 1. Similar to the front fender 2 according to the above-described embodiment, the side cover 2A can be transported with the collars 40 press-fitted in the attachment holes 30. The side cover 2A and the collars 40 can be transported as one assembly part. The side cover 2A can be attached to a vehicle body frame of a motorcycle by inserting the bolts 50 in the collars 40 held in the attachment holes 30.

As illustrated in FIG. 11, the collar 40 may not include the disc portion 42. The collar 40 may be constituted only by the cylindrical portion 41.

The resin part including the attachment holes 30 may be a vehicle part of some other straddled vehicle than a motorcycle. Note that the straddled vehicle is a vehicle on which a rider straddles thereon. The straddled vehicle is not limited to the motorcycle 1. The straddled vehicle may be, for example, a motor tricycle, an all-terrain vehicle (ATV), a snowmobile, or the like.

The resin part including the attachment holes 30 is not limited to a vehicle part of a straddled vehicle. The resin part including the attachment holes 30 may be some other part than a vehicle part.

The resin part including the attachment holes 30 may be entirely formed of resin, and may not be entirely formed of resin. In the resin part including the attachment holes 30, at least a portion of each attachment hole 30 may be formed of resin.

The number of the beams 32 and the number of the fasteners 31 may not be equal. For example, each of the fasteners 31 of the above-described embodiment (see FIG. 4) may be divided into a plurality of fasteners. When viewed from the direction along the center line 30c of the attachment hole 30, the lateral width W32 of the beams 32 may not be smaller than the lateral width W31 of the fasteners 31. When viewed from the direction along the center line 30c of the attachment hole 30, the dimension L32 of the beams 32 in the circumferential direction may not be smaller than the dimension L31 of the fasteners 31 in the circumferential direction.

When viewed from the direction along the center line 30c of the attachment hole 30, the outer edge 32bc of the end portion 32b of each of the beam 32 may not be necessarily curved.

The tilt angle θ of the beam 32 with respect to the radial direction of the attachment hole 30 may not be 30 degrees or more. As long as the beams 32 are bent and the collar 40 can be held with the elastic forces of the beams 32 when the collar 40 is press-fitted, there is no particular limitation on a value of the tilt angle θ.

### DESCRIPTION OF REFERENCE CHARACTERS

1 Motorcycle (straddled vehicle), 2 Front fender (resin part), 2A Side cover (resin part), 30 Attachment hole, 30a Inner peripheral potion, 30c Center line, 31 Fastener, 31a Peripheral edge, 32 Beam, 32a Root portion, 32b End portion, 32bc Outer edge, 40 Collar, 41 Cylindrical portion, 41s Outer peripheral surface, 42 Disc portion

## Claims

1. A resin part (2) having an attachment hole (30) configured for a collar (40) to be press-fitted, the resin part comprising:
a plurality of fasteners (31) extending in a circumferential direction of the attachment hole (30) and extending inwardly from an inner peripheral potion (30a) of the attachment hole (30) in a radial direction, and being arrayed in the circumferential direction of the attachment hole (30), **characterized by**
a plurality of beams (32) each including a root portion (32a) continuous to the inner peripheral potion (30a) of the attachment hole (30) and an end portion (32b) located more inward than the root portion (32a) in the radial direction and being flexibly deformable, wherein
each of the beams (32) extends in a direction tilted from the radial direction of the attachment hole (30), and
the end portions (32b) of the beams (32) are located more inward than the fasteners (31) in the radial direction.

2. The resin part (2) having the attachment hole (30) according to claim 1, **characterized in that** when viewed from a direction along a center line (30c) of the attachment hole (30), a lateral width (W32) of the beams (32) is smaller than a lateral width (W31) of the fasteners (31).

3. The resin part (2) having the attachment hole (30) according to claim 1 or 2, **characterized in that** when viewed from a direction along a center line (30c) of the attachment hole (30), a dimension (L32) of the beams (32) in the circumferential direction is smaller than a dimension (L31) of the fasteners (31) in the circumferential direction.

4. The resin part (2) having the attachment hole (30) according to any one of claims 1 to 3, **characterized in that** the number of the beams (32) and the number of the fasteners (31) are equal, and
each of the beams (32) is arranged between corresponding adjacent two of the fasteners (31) in the circumferential direction.

5. The resin part (2) having the attachment hole (30) according to any one of claims 1 to 4, **characterized in that** the number of the beams (32) is three.

6. The resin part (2) having the attachment hole (30) according to any one of claims 1 to 5, **characterized in that** when viewed from a direction along a center line (30c) of the attachment hole (30), the end portion (32b) of each of the beams (32) has a curved outer edge (32bc).

7. The resin part (2) having the attachment hole (30) according to any one of claims 1 to 6, **characterized in that** when viewed from a direction along a center line (30c) of the attachment hole (30), an end portion of each of the fasteners (31) has a circular-arc peripheral edge (31a).

8. The resin part (2) having the attachment hole (30) according to any one of claims 1 to 7, **characterized in that** a tilt angle (θ) of the beams (32) with respect to the radial direction of the attachment hole (30) is 30 degrees or more.

9. An assembly part, comprising:
the resin part (2) according to any one of claims 1 to 8; and
the collar (40) press-fitted in the attachment hole (30),
wherein
the collar (40) includes a cylindrical portion (41) having an outer peripheral surface (41s) and a disc portion (42) extending outwardly from the cylindrical portion (41) in the radial direction,
the outer diameter (d42) of the disc portion (42) is larger than double of a distance (r31) between the center line (30c) of the attachment hole (30) and each of the fasteners (31),
the outer diameter (d41) of the cylindrical portion (41) is larger than double of a distance (r32) between the center line (30c) of the attachment hole (30) and the end portion (32b) of each of the beams (32) when the beams (32) are not flexibly deformed,
the disc portion (42) is opposed to the fasteners (31) in the direction of the center line (30c) of the attachment hole (30),
the outer peripheral surface (41s) of the cylindrical portion (41) contacts the beams (32), and
the cylindrical portion (41) is held by the beams (32) with an elastic force generated by flexible deformation of the beams (32).

10. An assembly part comprising:
the resin part (2) according to any one of claims 1 to 8; and
the collar (40) press-fitted in the attachment hole (30),
wherein
the collar (40) includes a cylindrical portion (41) having an outer peripheral surface (41s),
the outer diameter (d41) of the cylindrical portion (41) is larger than double of a distance (r32) between the center line (30c) of the attachment hole (30) and the end portion (32b) of each of the beams (32) when the beams (32) are not flexibly deformed,
the outer peripheral surface (41s) of the cylindrical portion (41) contacts the beams (32), and
the cylindrical portion (41) is held by the beams (32) with an elastic force generated by flexible deformation of the beams (32).

11. A straddled vehicle (1) comprising:
a front fender (2); and
a side cover (2A),
wherein
the front fender (2) and/or the side cover (2A) are/is constituted by the assembly part according to claim 9 or 10.

## Patentansprüche

1. Ein Kunststoffteil (2), das ein Anbringungsloch (30) hat, das für einen Kragen (40), der einzupressen ist, konfiguriert ist, wobei das Kunststoffteil umfasst:
eine Mehrzahl von Befestigern (31), die sich in einer Umfangsrichtung des Anbringungslochs (30) erstrecken und sich von einem inneren Umfangsteil (30a) des Anbringungslochs (30) in einer radialen Richtung nach innen erstrecken, und die in der Umfangsrichtung des Anbringungslochs (30) angeordnet sind, **gekennzeichnet durch**
eine Mehrzahl von Stäben (32), die jeder einen Wurzelabschnitt (32a), der sich an den inneren Umfangsteil (30a) des Anbringungslochs (30) anschließt, und einen Endabschnitt (32b), der in der radialen Richtung weiter innen als der Wurzelabschnitt (32a) angeordnet ist und flexibel verformbar ist, beinhalten, wobei jeder der Stäbe (32) sich in einer Richtung erstreckt, die von der radialen Richtung des Anbringungslochs (30) geneigt ist, und
die Endabschnitte (32b) der Stäbe (32) in der radialen Richtung weiter innen angeordnet sind als die Befestiger (31).

2. Das Kunststoffteil (2), das ein Anbringungsloch (30) hat, gemäß Anspruch 1, **dadurch gekennzeichnet, dass,** von einer Richtung entlang einer Mittellinie (30c) des Anbringungslochs (30) aus gesehen, eine seitliche Breite (W32) der Stäbe (32) kleiner ist als eine seitliche Breite (W31) der Befestiger (31).

3. Das Kunststoffteil (2), das ein Anbringungsloch (30) hat, gemäß Anspruch 1 oder 2, **dadurch gekennzeichnet, dass,** von einer Richtung entlang einer Mittellinie (30c) des Anbringungslochs (30) aus gesehen, eine Abmessung (L32) der Stäbe (32) in der Umfangsrichtung kleiner ist als eine Abmessung (L31) der Befestiger (31) in der Umfangsrichtung.

4. Das Kunststoffteil (2), das ein Anbringungsloch (30) hat, gemäß irgendeinem der Ansprüche 1 bis 3, **dadurch gekennzeichnet, dass** die Anzahl der Stäbe (32) und die Anzahl der Befestiger (31) gleich sind, und
jeder der Stäbe (32) zwischen entsprechenden benachbarten zwei der Befestiger (31) in der Umfangsrichtung angeordnet ist.

5. Das Kunststoffteil (2), das ein Anbringungsloch (30) hat, gemäß irgendeinem der Ansprüche 1 bis 4, **dadurch gekennzeichnet, dass** die Anzahl der Stäbe (32) drei beträgt.

6. Das Kunststoffteil (2), das ein Anbringungsloch (30) hat, gemäß irgendeinem der Ansprüche 1 bis 5, **dadurch gekennzeichnet, dass,** von einer Richtung entlang einer Mittellinie (30c) des Anbringungslochs (30) aus gesehen, der Endabschnitt (32b) eines jeden Stabes (32) eine gekrümmte Außenkante (32bc) hat.

7. Das Kunststoffteil (2), das ein Anbringungsloch (30) hat, gemäß irgendeinem der Ansprüche 1 bis 6, **dadurch gekennzeichnet, dass,** von einer Richtung entlang einer Mittellinie (30c) des Anbringungslochs (30) aus gesehen, ein Endabschnitt jedes der Befestiger (31) eine kreisbogenförmige Umfangskante (31a) hat.

8. Das Kunststoffteil (2), das ein Anbringungsloch (30) hat, gemäß irgendeinem der Ansprüche 1 bis 7, **dadurch gekennzeichnet, dass** ein Neigungswinkel (θ) der Stäbe (32) in Bezug auf die radiale Richtung des Anbringungslochs (30) 30 Grad oder mehr beträgt.

9. Ein Montageteil, das umfasst:
das Kunststoffteil (2) gemäß irgendeinem der Ansprüche 1 bis 8; und
den Kragen (40), der in das Anbringungsloch (30) gepresst ist,
wobei
der Kragen (40) einen zylindrischen Abschnitt (41), der eine äußere Umfangsfläche (41s) hat, und einen Scheibenabschnitt (42), der sich von dem zylindrischen Abschnitt (41) in radialer Richtung nach außen erstreckt, beinhaltet,
der Außendurchmesser (d42) des Scheibenabschnitts (42) größer ist als das Doppelte eines Abstands (r31) zwischen der Mittellinie (30c) des Anbringungslochs (30) und jedem der Befestiger (31),
der Außendurchmesser (d41) des zylindrischen Abschnitts (41) größer ist als das Doppelte eines Abstands (r32) zwischen der Mittellinie (30c) des Anbringungslochs (30) und dem Endabschnitt (32b) von jedem der Stäbe (32), wenn die Stäbe (32) nicht elastisch verformt sind,
der Scheibenabschnitt (42) den Befestigern (31) in der Richtung der Mittellinie (30c) des Anbringungslochs (30) gegenüberliegt,
die äußere Umfangsfläche (41s) des zylindrischen Abschnitts (41) die Stäbe (32) berührt, und
der zylindrische Abschnitt (41) von den Stäben (32) mit einer elastischen Kraft gehalten wird, die durch flexible Verformung der Stäbe (32) erzeugt wird.

10. Ein Montageteil, das umfasst:
das Kunststoffteil (2) gemäß irgendeinem der Ansprüche 1 bis 8; und
den Kragen (40), der in das Anbringungsloch (30) eingepresst ist,
wobei
der Kragen (40) einen zylindrischen Abschnitt (41), der eine äußere Umfangsfläche (41s) hat, beinhaltet,
der Außendurchmesser (d41) des zylindrischen Abschnitts (41) größer ist als das Doppelte eines Abstands (r32) zwischen der Mittellinie (30c) des Anbringungslochs (30) und dem Endabschnitt (32b) von jedem der Stäbe (32), wenn die Stäbe (32) nicht elastisch verformt sind,
die äußere Umfangsfläche (41s) des zylindrischen Abschnitts (41) die Stäbe (32) berührt, und
der zylindrische Abschnitt (41) von den Stäben (32) mit einer elastischen Kraft gehalten wird, die durch flexible Verformung der Stäbe (32) erzeugt wird.

11. Ein Spreiz-Sitz-Fahrzeug (1), das umfasst:
einen vorderen Kotflügel (2); und
eine Seitenabdeckung (2A),
wobei
der vordere Kotflügel (2) und/oder die Seitenabdeckung (2A) durch das Montageteil gemäß Anspruch 9 oder 10 gebildet wird/werden.

## Revendications

1. Pièce en résine (2) dotée d'un trou de fixation (30) configuré pour un collier (40) à monter à la presse, la pièce en résine comprenant :
une pluralité d'attaches (31) s'étendant dans une direction circonférentielle du trou de fixation (30) et s'étendant vers l'intérieur à partir d'une potion périphérique intérieure (30a) du trou de fixation (30) dans une direction radiale, et étant disposées dans la direction circonférentielle du trou de fixation (30), **caractérisées par** une pluralité de poutres (32) comprenant chacune une partie racine (32a) continue à la potion périphérique intérieure (30a) du trou de fixation (30) et une partie d'extrémité (32b) située plus à l'intérieur que la partie racine (32a) dans la direction radiale et pouvant être déformée de manière flexible, dans laquelle chacune des poutres (32) s'étend dans une direction inclinée par rapport à la direction radiale du trou de fixation (30), et
les parties d'extrémité (32b) des poutres (32) sont situées plus à l'intérieur que les attaches (31) dans la direction radiale.

2. Pièce en résine (2) doté du trou de fixation (30) selon la revendication 1, **caractérisée par le fait que**, vue d'une direction le long d'une ligne centrale (30c) du trou de fixation (30), une largeur latérale (W32) des poutres (32) est plus petite qu'une largeur latérale (W31) des attaches (31).

3. Pièce en résine (2) doté du trou de fixation (30) selon les revendications 1 ou 2, **caractérisée par le fait que**, vue d'une direction le long d'une ligne centrale (30c) du trou de fixation (30), une dimension (L32) des poutres (32) dans la direction circonférentielle est plus petite qu'une dimension (L31) des attaches (31) dans la direction circonférentielle.

4. Pièce en résine (2) doté du trou de fixation (30) selon l'une quelconque des revendications 1 à 3, **caractérisée par le fait que le** nombre de poutres (32) et le nombre d'attaches (31) sont égaux, et que chacune des poutres (32) est disposée entre deux attaches adjacentes correspondantes (31) dans la direction circonférentielle.

5. Pièce en résine (2) doté du trou de fixation (30) selon l'une quelconque des revendications 1 à 4, **caractérisée par le fait que le** nombre de poutres (32) est de trois.

6. Pièce en résine (2) doté du trou de fixation (30) selon l'une quelconque des revendications 1 à 5, **caractérisée en ce que**, vue d'une direction le long d'une ligne centrale (30c) du trou de fixation (30), la partie d'extrémité (32b) de chacune des poutres (32) présente un bord extérieur incurvé (32bc).

7. Pièce en résine (2) doté du trou de fixation (30) selon l'une quelconque des revendications 1 à 6, **caractérisée en ce que**, vue d'une direction le long d'une ligne centrale (30c) du trou de fixation (30), une partie d'extrémité de chacune des attaches (31) présente un bord périphérique en arc de cercle (31a).

8. Pièce en résine (2) doté du trou de fixation (30) selon l'une quelconque des revendications 1 à 7, **caractérisée par un** angle d'inclinaison (0) des poutres (32) par rapport à la direction radiale du trou de fixation (30) de 30 degrés ou plus.

9. Pièce d'assemblage comprenant :
la pièce en résine (2) selon l'une quelconque des revendications 1 à 8 ; et
le collier (40) ajusté par pression dans le trou de fixation (30), dans lequel le collier (40) comprend une partie cylindrique (41) ayant une surface périphérique extérieure (41s) et une partie disque (42) s'étendant vers l'extérieur de la partie cylindrique (41) dans la direction radiale,
le diamètre extérieur (d42) de la partie du disque (42) est plus grand que le double d'une distance (r31) entre la ligne centrale (30c) du trou de fixation (30) et
chacune des attaches (31),
le diamètre extérieur (d41) de la partie cylindrique (41) est supérieur au double d'une distance (r32) entre la ligne centrale (30c) du trou de fixation (30) et la partie terminale (32b) de chacune des poutres (32) lorsque les poutres (32) ne sont pas déformées par la flexion,
la partie du disque (42) est opposée aux fixations (31) dans la direction de la ligne centrale (30c) du trou de fixation (30),
la surface périphérique extérieure (41s) de la partie cylindrique (41) est en contact avec les poutres (32), et
la partie cylindrique (41) est maintenue par les poutres (32) avec une force élastique générée par la déformation flexible des poutres (32).

10. Pièce d'assemblage comprenant :
la pièce en résine (2) selon l'une quelconque des revendications 1 à 8 ; et
le collier (40) ajusté par pression dans le trou de fixation (30), dans lequel le collier (40) comprend une partie cylindrique (41) ayant une surface périphérique extérieure (41s),
le diamètre extérieur (d41) de la partie cylindrique (41) est supérieur au double d'une distance (r32) entre la ligne centrale (30c) du trou de fixation (30) et la partie d'extrémité (32b) de chacune des poutres (32) lorsque les poutres (32) ne sont pas déformées par la flexion,
la surface périphérique extérieure (41s) de la partie cylindrique (41) est en contact avec les poutres (32), et
la partie cylindrique (41) est maintenue par les poutres (32) avec une force élastique générée par la déformation flexible des poutres (32).

11. Véhicule à enfourcher (1) comprenant :
un garde-boue avant (2) ; et
un couvercle latéral (2A),
dans lequel
l'aile avant (2) et/ou le couvercle latéral (2A) est/sont constitué(s) par la pièce d'assemblage selon la revendication 9 ou 10.
